# EUROPEAN PATENT APPLICATION

(11) **EP 1 541 982 A1**
(43) Date of publication of application: **15.06.2005**
(21) Application number: 03792828.0
(22) Date of filing: 25.08.2003
(51) Int. Cl.: G01L 3/10, B62D 5/04

(54) **ELECTRIC POWER STEERING APPARATUS**

(30) Priority: 26.08.2002 JP 2002245108
(71) Applicant: NSK Ltd.,, Shinagawa-ku, Tokyo 141-8560 (JP)
(72) Inventor: CHIKARAISHI, Kazuo, c/o NSK LTD., Maebashi-Shi, Gunma 371-8528 (JP)
(74) Representative: Klunker . Schmitt-Nilson . Hirsch
(86) International application number: PCT/JP2003/010695
(87) International publication number: WO 2004/018987

(57) **Abstract**

The present invention provides a motor-driven power steering apparatus structured such that the motor-driven power steering apparatus is provided with a coil bobbin capable of being connected to a sensor circuit board via two connection pins held in an inner portion of a holding portion formed by an electromagnetic yoke and a yoke cover and provided in a terminal table of a side surface upper end portion in a rising manner, a torque sensor formed by facing at least the coil bobbin and the coil bobbin having the same structure to each other is attached and held within a sensor housing, and a steering torque generated on the basis of a steering wheel operation is detected by the torque sensor, in which a regulating means for regulating a phase difference of each of the connection pins toward a peripheral direction is provided in the facing surface side of each of the terminal tables.

## Description

### Technical Field

The present invention relates to a motor-driven power steering apparatus structured such as to detect a steering torque generated on the basis of a steering wheel operation by a torque sensor and apply a steering assist force generated by a motor to a steering system, and more particularly to a structure of the torque sensor.

### Background Art

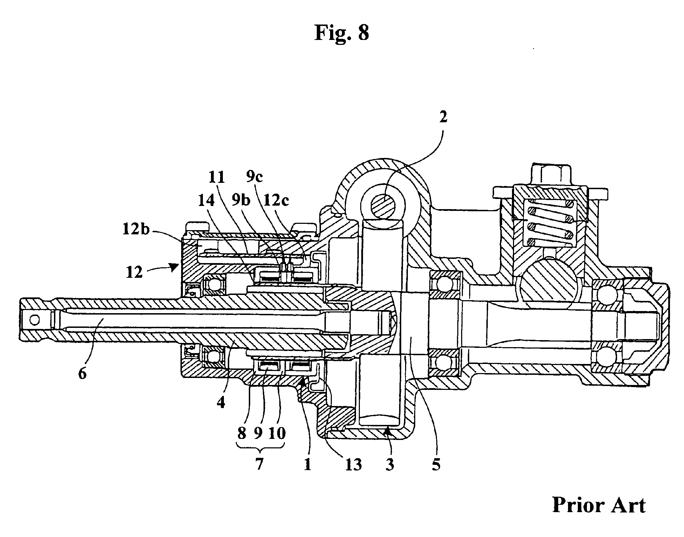

In order to reduce a fatigue of a driver and safely drive, a motor-driven power steering apparatus is mounted on a vehicle. The motor-driven power steering apparatus is provided with a torque sensor detecting a steering torque generated on the basis of a steering wheel operation. For example, in a pinion assist type motor-driven power steering apparatus, as shown in Fig. 8 which is a cross sectional view showing an outline structure of the steering system, a torque sensor 1 is structured such as to be arranged in an upstream side (a driver side) from a speed reduction mechanism 3 to which an assist torque is applied via a motor output shaft 2, take out a torsion angle of a torsion bar 6 generated in correspondence to a torque between an input shaft 4 and an output shaft 5 (a phase difference between the shafts) as a magnetic change, and detect the change by a coil unit 7 in a non-contact manner.

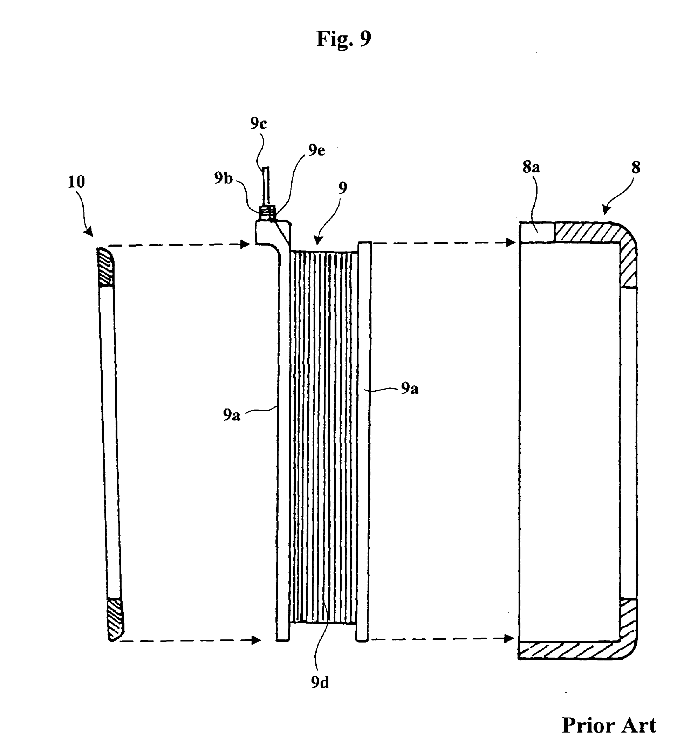

The coil unit 7 is structured, as shown in Fig. 9 showing each of parts in an exploded manner, such that a coil bobbin 9 connectable to a sensor circuit board mentioned below via two connection pins provided in a rising manner on a terminal table of a side surface upper end portion is provided in an inner portion of a holding portion formed by an electromagnetic yoke 8 and a yoke cover 10, and the torque sensor 1 is structured such that the coil unit 7 and the coil unit 7 having the same structure are faced to each other, at least the coil bobbin 9 and the coil bobbin 9 having the same structure are faced to each other. In this case, a broken arrow in Fig. 9 shows an assembling direction.

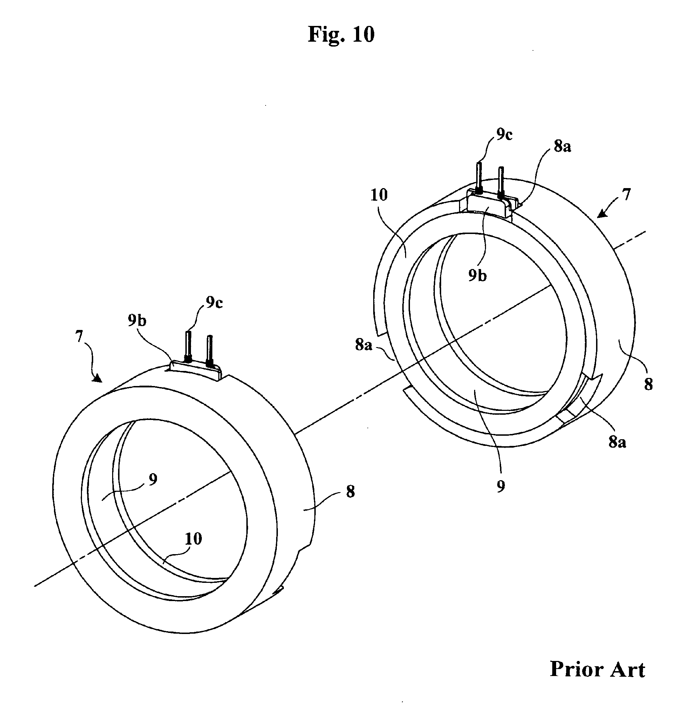

In this case, the coil bobbin 9 is formed in a reel shape by a resin material, and two connection pins 9c connected to a sensor circuit board 11 shown in Fig. 8 are pressure inserted and fixed to a terminal table 9b formed in an upper end portion of one flange portion 9a so as to be provided in a rising manner. A leading end portion of a coil winding 9d is connected to one of the connection pins 9c so as to be soldered, and a terminal end portion of the coil winding 9d wound around a groove portion of the coil bobbin 9 (between the flange portions 9a) is connected to the other connection pin 9c so as to be soldered. After the coil bobbin 9 formed in this manner is fitted and attached to an inner side of an electromagnetic yoke 8 serving as a holding member, a yoke cover 10 serving as the holding member is pressure inserted to an inner diameter of the electromagnetic yoke 8 so as to be integrally held, whereby the coil unit 7 shown by a perspective view in Fig. 10 is assembled. In this case, Fig. 10 shows a state before the coil unit 7 and the other coil unit 7 having the same structure are assembled.

The terminal table 9b of the coil bobbin 9 protrudes to an outer side in a radial direction of an outer periphery of the electromagnetic yoke 8 from one of a plurality of (three in this example) notch portions 8a provided in a diametrical direction of an end surface of the electromagnetic yoke 8, and can be connected to the sensor circuit board 11. In this case, the notch portion 8a of the electromagnetic yoke 8 and the terminal table 9b are brought into contact with each other in a peripheral direction, whereby a relative rotation thereof can be prevented. Further, the coil winding 9d is wired to the connection pin 9c through a groove 9e provided in a root portion of the terminal table 9b, whereby the structure is made such that a short circuit with the electromagnetic yoke 8 made of a metal can be prevented.

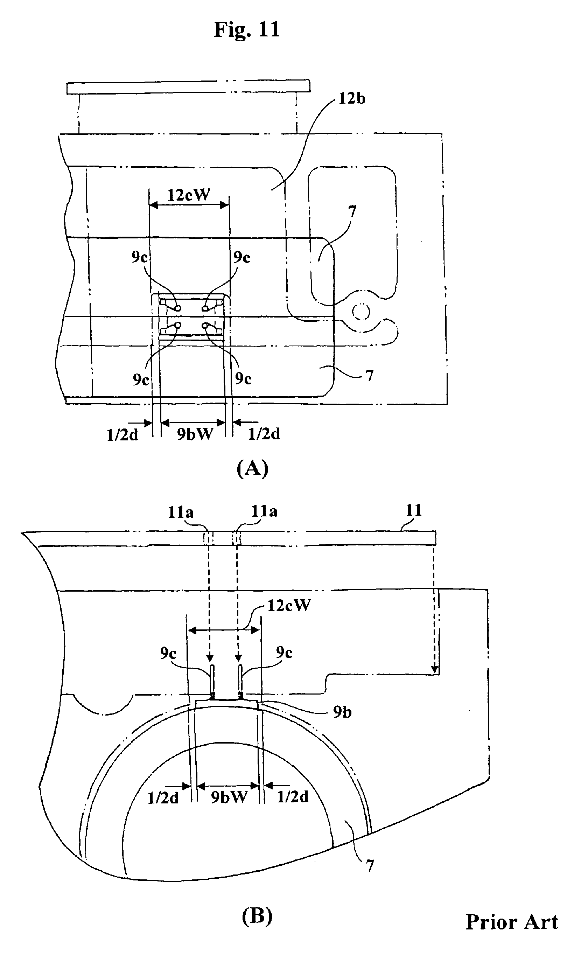

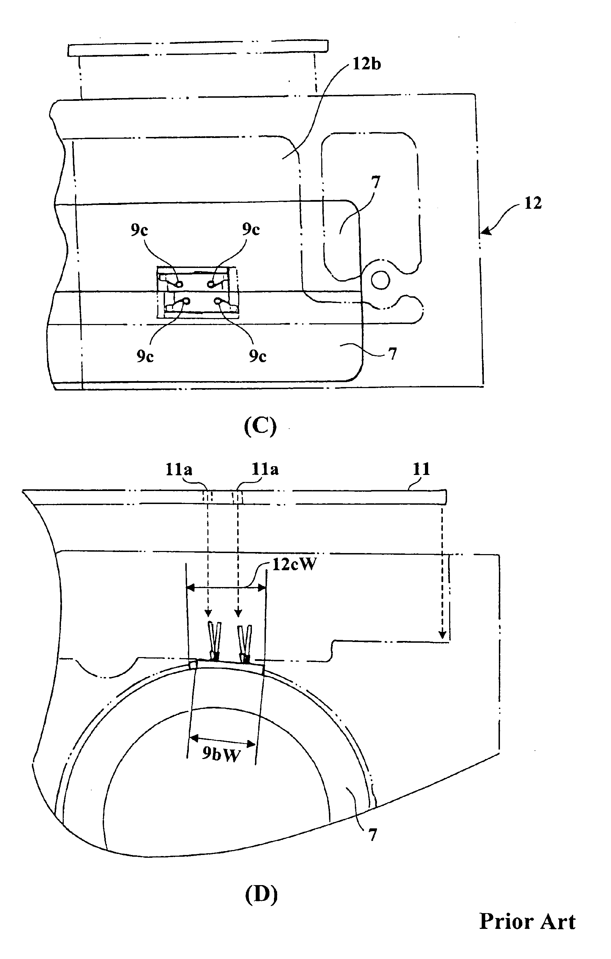

The coil unit 7 manufactured in the manner mentioned above and the coil unit 7 having the same structure, at least the coil bobbin 9 and the coil bobbin 9 having the same structure are fitted and attached within a sensor housing 12 shown in Fig. 8 so as to face side surfaces of the terminal tables 9b to each other as shown in Fig. 10. A loading hole 12a to which the coil unit 7 is fitted so as to be loaded, a sensor circuit board chamber 12b which receives the sensor circuit board 11, and an axial groove 12c with which the terminal table 9b of the coil bobbin 9 can be communicated are provided within the sensor housing 12. Two coil units 7 are pressed until the coil units 7 are brought into contact with a back side end surface of the loading hole 12a in such a manner that side surfaces of the terminal table 9b are faced to each other, and the terminal table 9b portion passes through the axial groove 12c, and are thereafter pressed and fixed by an approximately circular ring-shaped elastic member 13. A sleeve 14 integral with the output shaft 5 is inserted into a hollow portion of two coil units 7 loaded in this manner. In this case, in the axial groove 12c, in order to allow the terminal table 9b to be easily inserted, an opening width 12cW in a peripheral direction is somewhat wider than a width 9bW of the terminal table 9b, and 12cW - 9bW = d (gap) is provided. Fig. 11A is a plan view showing this state, and Fig. 11B is a side view thereof.

However, in the conventional motor-driven power steering apparatus in which the torque sensor 1 is structured by providing with the gap d in the width direction between the axial groove 12c within the sensor housing 12 and the terminal table 9b of the coil bobbin 9, the respective connection pins 9c are not necessarily fixed such as to be in parallel with each other as shown in Figs. 11A and 11B and such that each of the axes coincides with a center of a through hole 11a previously provided in the sensor circuit board 11, at a time of fitting each of the coil units 7 into the loading hole 12a, due to the gap d. For example, as shown by a plan view in Fig. 11C and by a side view thereof in Fig. 11D, there is a disadvantage that a phase in the peripheral direction of each of the connection pins 9c is relatively shifted, and the connection pins 9c are inclined to each other.

If the position of the connection pin 9c is shifted as mentioned above, the leading end portion of the connection pin 9c does not enter into the through hole 11a provided in the sensor circuit board 11, so that there is generated a problem that the connection to the sensor circuit board 11 can not be achieved.

Accordingly, in order to allow the connection pin to be inserted to the through hole 11a even in the case of the connection pins 9c which are inclined to each other, there can be considered a matter that a hole diameter of the through hole 11a itself is enlarged, however, if the hole is too large, the soldering for connection is incompletely executed, so that there is a problem that a reliability is significantly lowered because the torque can not be detected or is inaccurately detected.

However, in the case that the gap d in the width direction between the axial groove 12c and the terminal table 9b is narrowed only because of the above reason, there is a risk that an unreasonable force is applied to the terminal table 9b made of a resin at a time of assembling, whereby the terminal table 9b is damaged.

The present invention is made by taking the actual condition mentioned above into consideration, and an object of the present invention is to provide a motor-driven power steering apparatus which solves the disadvantage in the conventional motor-driven power steering apparatus, is provided with a coil bobbin capable of being connected to a sensor circuit board via two connection pins held in an inner portion of a holding portion formed by an electromagnetic yoke and a yoke cover and provided in a terminal table of a side surface upper end portion in a risingmanner, the connection pin of the coil bobbin in one holding portion and the connection pin of the coil bobbin in the other holding portion are accurately positioned so as to be in parallel with each other at a time of structuring a torque sensor formed by facing at least the coil bobbin and the coil bobbin having the same structure to each other, and the sensor circuit board is easily attached to a housing without enlarging a through hole in the sensor circuit board.

### Disclosure of the Invention

The present invention relates to a motor-driven power steering apparatus structured such that the motor-driven power steering apparatus is provided with a coil bobbin capable of being connected to a sensor circuit board via two connection pins held in an inner portion of a holding portion formed by an electromagnetic yoke and a yoke cover and provided in a terminal table of a side surface upper end portion in a rising manner, a torque sensor formed by facing at least the coil bobbin and the coil bobbin having the same structure to each other is attached and held within a sensor housing, and a steering torque generated on the basis of a steering wheel operation is detected by the torque sensor. The object mentioned above of the present invention can be effectively achieved by providing with a regulating means for regulating a phase difference of each of the connection pins toward a peripheral direction in the facing surface side of each of the terminal tables.

Further, the object mentioned above of the present invention can be more effectively achieved by constituting the regulating means by a concave portion and a convex portion provided so as to be fitted to each other in the facing surface side of each of the terminal tables.

Further, the object mentioned above of the present invention can be more effectively achieved by constituting the regulating means by a step formed by a concave portion and a convex portion in an axial direction in the facing surface side of each of the terminal tables.

Further, the object mentioned above of the present invention can be more effectively achieved by forming the regulating means provided in each of the terminal tables in the same shape which is in parallel with the connection pin and is symmetrical to a perpendicular line passing through a center of the facing surface.

Further, the object mentioned above of the present invention can be more effectively achieved by setting a depth of the concave portion to be larger than a height of the convex portion.

### Brief Description of the Drawings

Fig. 1 is a perspective view of a first embodiment of a coil unit corresponding to a main portion in accordance with the present invention;
Fig. 2A is a plan view of a coil unit in accordance with the first embodiment mentioned above;
Fig. 2B is an enlarged view of a main portion in Fig. 2A;
Fig. 3 is a plan view showing a state in which two coil units in accordance with the first embodiment mentioned above are assembled;
Fig. 4 is a plan view of a modified embodiment of the coil unit corresponding to the main portion of the present invention;
Fig. 5 is a perspective view of a second embodiment of the coil unit corresponding to the main portion of the present invention;
Fig. 6A is a plan view of a coil unit in accordance with a second embodiment mentioned above;
Fig. 6B is an enlarged view of a main portion in Fig. 6A;
Fig. 7 is a plan view showing a state in which two coil units in accordance with the second embodiment mentioned above are assembled;
Fig. 8 is a cross sectional view showing an outline structure of a steering system in a conventional pinion assist type motor-driven power steering apparatus;
Fig. 9 is an exploded view showing a structure of a coil unit in the conventional steering system mentioned above;
Fig. 10 is a perspective view of the conventional coil unit mentioned above;
Fig. 11A is a plan view showing a state in which two conventional coil units mentioned above are assembled;
Fig. 11B is a side view thereof;
Fig. 11C is a plan view showing a case that a phase of a connection pin is shifted in correspondence to Fig. 11A; and
Fig. 11D is a side view thereof.

### Best Mode for Carrying Out the Invention

A description will be given below of first and second embodiments of a motor-driven power steering apparatus in accordance with the present invention with reference to the accompanying drawings. In this case, it goes without saying that the present invention is not necessarily limited to the following embodiments, and can employ various modifications within the scope of the present invention.

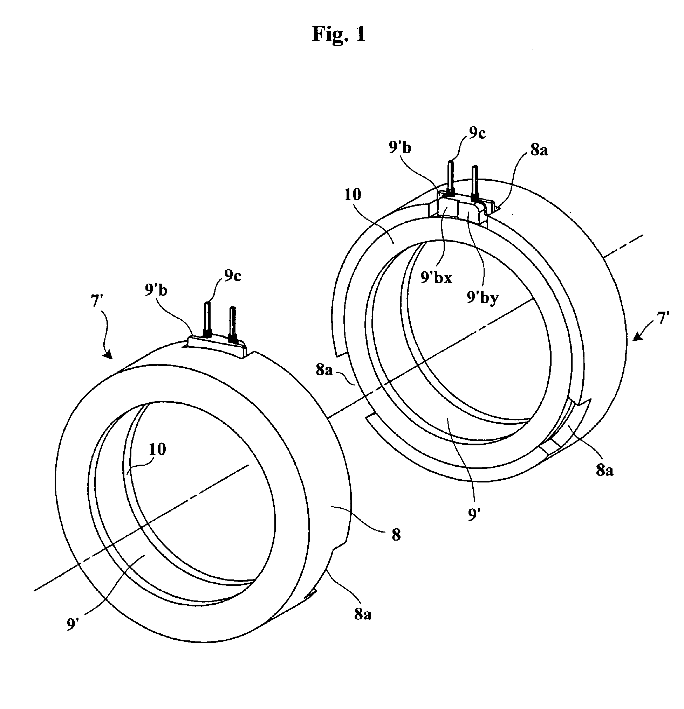

Fig. 1 is a perspective view showing a coil unit 7' in a main portion of a motor-driven power steering apparatus in accordance with a first embodiment of the present invention, and shows a state before assembling two coil units 7' having the same structure. The present coil unit 7' is structured so as to improve the coil unit 7 in the conventional motor-driven power steering apparatus mentioned above, in specific, to have a coil bobbin 9' in which the shape of the coil bobbin 9 is improved, and the other constituting parts of the coil unit are the same as those of the coil unit 7 mentioned above. Accordingly, a description will be given by attaching the same reference numerals to the common constituting parts in the following drawings and attaching reference numerals with dash to the improved constituting parts.

In the motor-driven power steering apparatus in accordance with the present invention, the coil unit 7' is constituted by an electromagnetic yoke 8, a coil bobbin 9' and a yoke cover 10 in the same manner as the coil unit 7 mentioned above.

In this case, the coil bobbin 9' is formed in a reel shape by a resin member, and two connection pins 9c connected to a sensor circuit board 11 are pressure inserted and fixed to a terminal table 9'b formed in an upper end portion of one flange portion 9a in a rising manner. A leading end portion of a coil winding 9d is connected to one of the connection pin 9c so as to be soldered, and a terminal end portion of a coil winding 9d wound around a groove portion of the coil bobbin 9' (between the flange portions 9a) is connected to the other connection pin 9c so as to be soldered. After the coil bobbin 9' formed in this manner is fitted and attached to an inner side of the electromagnetic yoke 8, a yoke cover 10 is pressure inserted to an inner diameter of the electromagnetic yoke 8 so as to be integrally formed, whereby the coil unit 7' shown by a perspective view in Fig. 1 is assembled. In this case, Fig. 1 shows a state before the coil unit 7' and the other coil unit 7' having the same structure are assembled. Two of the coil units 7' assembled in this manner are attached and held to a loading hole 12a within a sensor housing 12 so as to face side surfaces of the terminal table 9'b in the same manner as mentioned above.

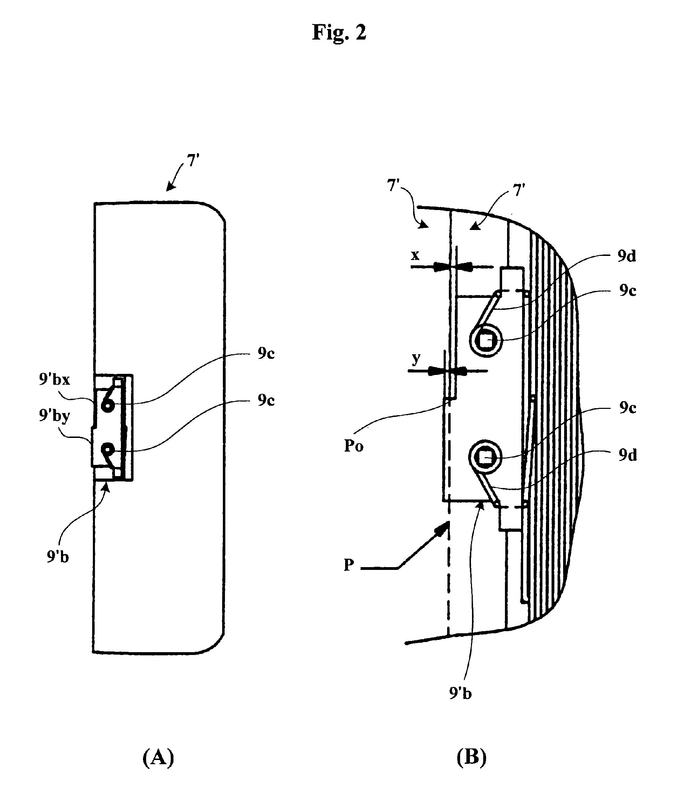

As shown by a plan view in Fig. 2A and by an enlarged view of a main portion thereof in Fig. 2B, a concave portion 9'bx and a convex portion 9' by formed in a flat shape are formed in an axial direction, in the terminal table 9'b formed in an upper end portion of the flange portion 9a of the coil bobbin 9' , on the border of a center position of a distance between two connection pins 9c in a mating face P side thereof, that is, a perpendicular line PO being in parallel with two connection pins 9c and passing through the center of the mating face P, whereby a step is provided. The coil unit 7' having the same shape can be structured while using the coil bobbin 9' having the same shape, by setting the step as mentioned above. Accordingly, since it is possible to reduce a number of molds at a time of molding, and it is possible to intend to use the part, that is, the coil bobbin 9' in common, it is possible to reduce a manufacturing cost. In this case, as shown in Fig. 2B, on the assumption that a depth of the concave portion 9'bx with respect to the mating face P is x, and a height of the convex portion 9'by is y, x is set to be larger than y, that is, an expression x > y is established. This prevents end surfaces of the coil bobbins 9' from being brought into contact with each other prior to the yoke covers 10, whereby both the elements are open, at a time of facing the terminal tables 9'b of the coil units 7' to each other, in other words, facing the yoke covers 10 of the coil units 7' to each other.

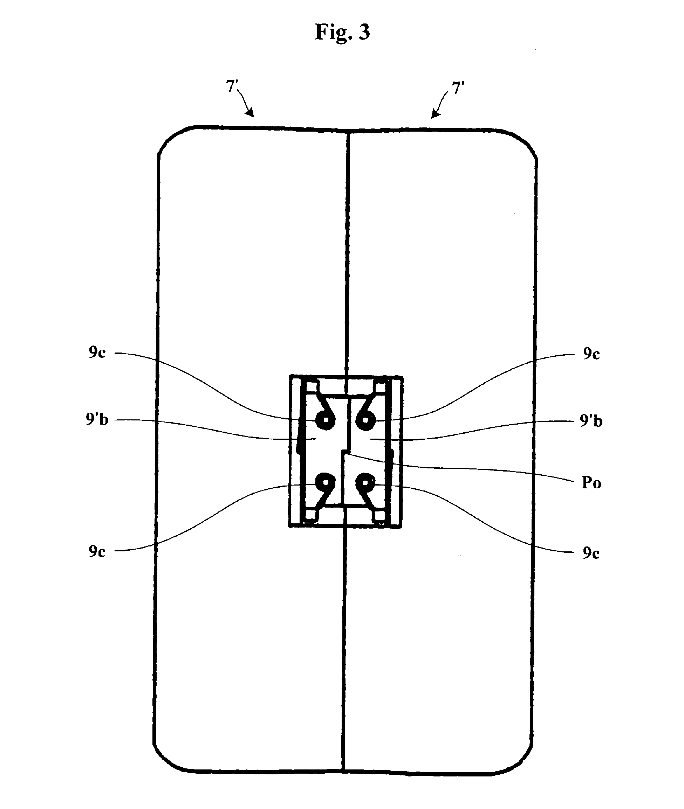

If the coil unit 7' is assembled so as to face the terminal tables 9'b provided with the steps having the same shape which are symmetrical with respect to the perpendicular line Po which is in parallel with the connection pin 9c and passes through the center of the mating surface P, to each other, the concave portion 9'bx of the terminal table 9'b in one coil unit 7' is fitted to the convex portion 9'by of the terminal table 9'b in the other coil unit 7' , as shown by a plan view in Fig. 3, whereby both the elements are prevented from rotating in the peripheral direction by the step portion, and a shift of phase is regulated. Accordingly, in the present coil unit 7' , it is possible to always keep a position of the connection pin 9c at a predetermined position, and it is possible to securely insert to a through hole 11a of a sensor circuit board 11 so as to connect. Therefore, if the torque sensor 1 is constituted by using the present coil unit 7' , it is possible to accurately detect a steering torque, and it is possible to improve a reliability of the motor-driven power steering apparatus.

In this case, in order to regulate the phase shift in the peripheral direction of the coil unit 7', it is also possible to set the boundary mentioned above to the other position than the center of the distance between two connection pins 9c, that is, the position shifted from the perpendicular line P O , thereby setting the step in an asymmetrical shape, however, in this case, it is necessary to set the shape of the employed coil bobbin 9' to different shapes for the right one and for the left one. Accordingly, since a number of the molds at a time of molding is increased, and it is impossible to intend to use the parts in common, there is a disadvantage that a manufacturing cost is increased. Further, since it is necessary to assemble in a state of differentiating the right one and the left one, whereby there is a disadvantage that it is troublesome to assemble, it is desirable to form the terminal table 9'b of the coil bobbin 9' in the same shape symmetrical to the perpendicular line P O which is in parallel with the connection pin 9c and passes through the center of the mating face P.

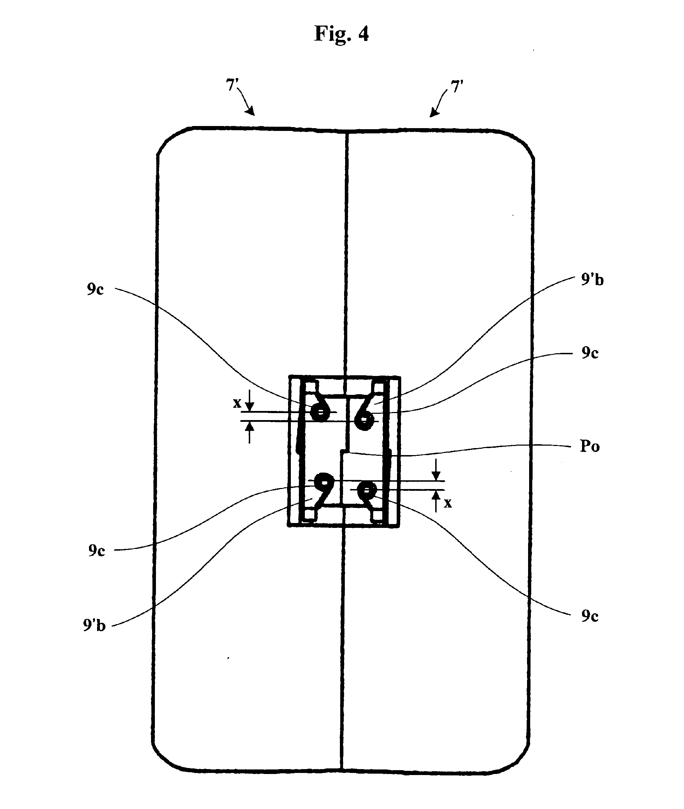

Further, the embodiment mentioned above corresponds to a case that two connection pins 9c provided on the upper surface of the terminal tables 9'b of each of the coil bobbins 9' are in parallel with each other, and the positions thereof coincide with each other in the vertical and horizontal directions as seen from a plan view, however, two connection pins 9c may be a coil unit constituted by coil bobbins provided in a rising manner so as to be shifted at a distance x in a vertical direction, that is, a diametrical direction, for example, as shown by a plan view in Fig. 4, and in this case, the through hole 11a of the sensor circuit board 11 may be provided such that a position thereof coincides with a position of each of the connection pins 9c.

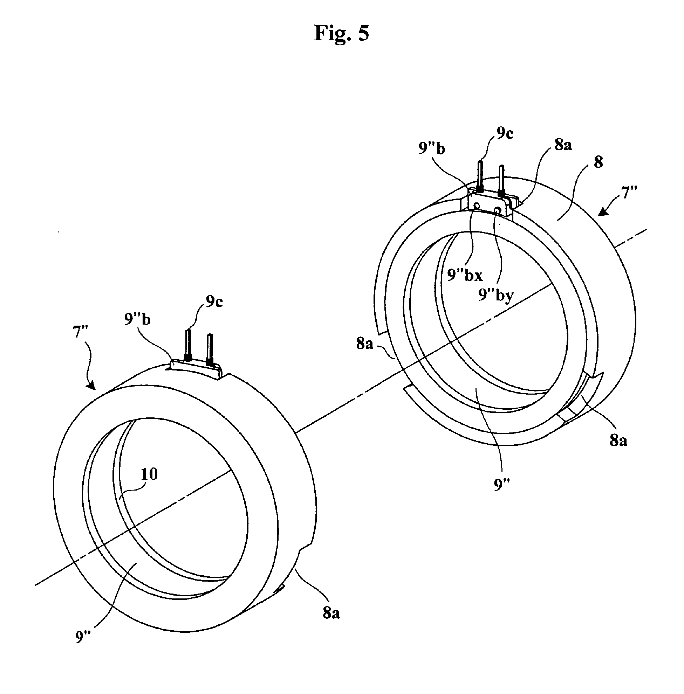

Fig. 5 is a perspective view showing a coil unit 7" in a main portion of a motor-driven power steering apparatus in accordance with a second embodiment of the present invention, and shows a state before assembling two coil units 7" having the same shape. The present coil unit 7" is structured as a modified embodiment of the coil unit 7' mentioned above, in specific, is structured such as to have a coil bobbin 9" in which the shape of the coil bobbin 9' mentioned above is improved. In this case, since the other constituting parts are the same as those of the conventional coil unit 7, a description will be given by attaching the same reference numerals to the common constituting parts in the following drawings and attaching reference numerals with two dash to the improved constituting parts.

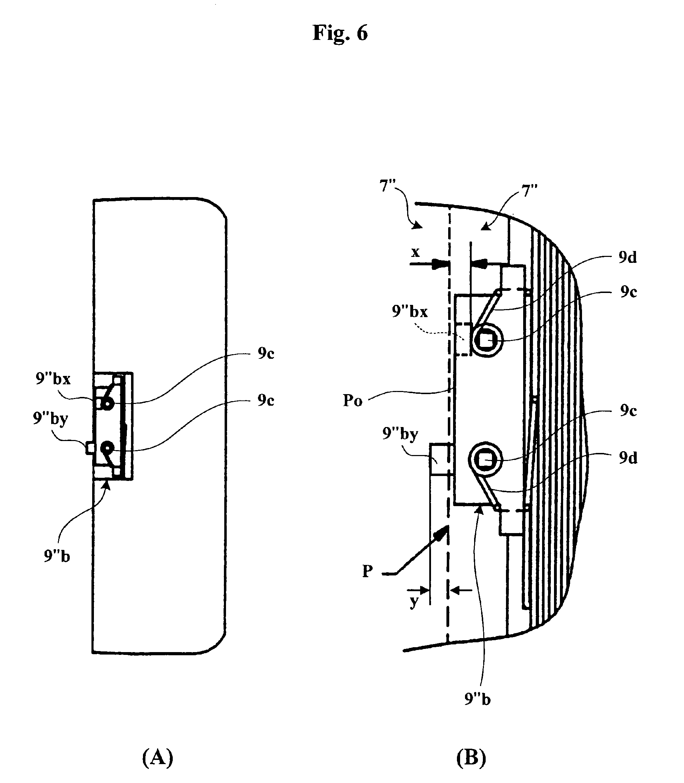

In the present coil unit 7", as shown by a plan view in Fig. 6A and by an enlarged view of a main portion thereof in Fig. 6B, a concave portion 9"bx and a convex portion 9"by formed in a circular shape are formed in an axial direction, at symmetrical positions, in the terminal table 9"b formed in an upper end portion of the flange portion 9a of the coil bobbin 9", on the border of a center position of a distance between two connection pins 9c in a mating face P side thereof, that is, a perpendicular line PO being in parallel with two connection pins 9c and passing through the center of the mating face P. The coil unit 7' having the same shape can be structured while using the coil bobbin 9' having the same shape in the same manner as mentioned above, by setting the concave -convex portion symmetrical to the center position, that is, the perpendicular line PO. Accordingly, since it is possible to reduce a number of molds at a time of molding in the same manner as mentioned above, and it is possible to intend to use the part, that is, the coil bobbin 9" in common, it is possible to reduce a manufacturing cost. In this case, as shown in Fig. 6B, on the assumption that a depth of the concave portion 9"bx with respect to the mating face P is x, and a height of the convex portion 9"by is y, x is set to be larger than y, that is, an expression x > y is established. This prevents end surfaces of the coil bobbins 9" from being brought into contact with each other prior to the yoke covers 10, whereby both the elements are open, at a time of facing the terminal tables 9"b of the coil units 7" to each other, in other words, facing the yoke covers 10 of the coil units 7" to each other in the same manner as mentioned above.

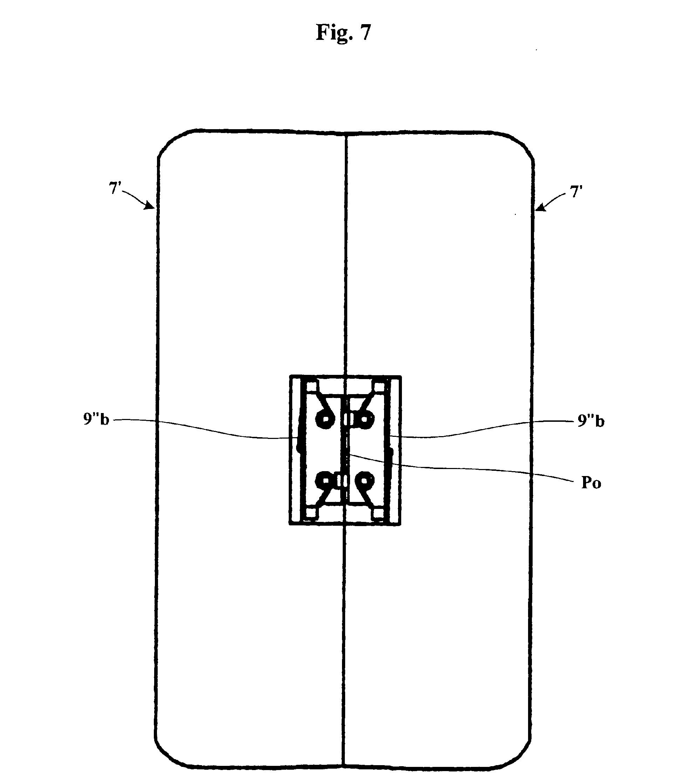

As mentioned above, since the concave -convex portion is provided in the mating face P side of the terminal table 9" in the present coil unit 7", the concave portion 9"bx of the terminal table 9"b in one coil unit 7" is fitted to the convex portion 9"by of the terminal table 9"b in the other coil unit 7", as shown by a plan view in Fig. 7, by assembling the coil units 7" with each other. Accordingly, both the elements are prevented from rotating in the peripheral direction, and a shift of phase is regulated. Accordingly, in accordance with the present coil unit 7", in the same manner as mentioned above, it is possible to always keep a position of the connection pin 9c at a predetermined position, and it is possible to securely insert to the through hole 11a so as to connect without enlarging the hole diameter of the through hole 11a of the sensor circuit board 11. Therefore, it is possible to obtain the same effect as mentioned above by the present coil unit 7".

In this case, in the second embodiment mentioned above, two concave -convex portions having the circular shape in the axial direction are provided at the symmetrical positions on the boundary of the center position of the distance between two connection pins, that is, the perpendicular line PO which is in parallel with two connection pins 9c and passes through the center of the mating face P, as the regulating means for regulating the phase difference in the peripheral direction of the coil unit 7" , however, the shape and the number of the concave -convex portion can be optionally designed as occasion demands.

In any cases, it is further preferable that the regulating means provided in the terminal table of the coil bobbin in the present invention is formed in the same shape symmetrical to the perpendicular line which is in parallel with the connection pin and passes through the mating face, and can regulate the phase difference in the peripheral direction by assembling both the elements by the mating face. In accordance with the coil bobbin having the same shape, it is possible to structure the coil unit having the same shape. Accordingly, since it is possible to reduce the number of the mold at a time of molding, and it is possible to use the parts in common, it is possible to reduce the manufacturing cost as motioned above.

The description is given above of the contents of the present invention on the basis of the pinion assist type motor-driven power steering apparatus, however, it goes without saying that the present invention can be applied to the other type of motor-driven power steering apparatus such as a column assist type and the like.

Further, the structure of the torque sensor in the pinion assist type motor-driven power steering apparatus is made such as to attach and hold two coil units within the sensor housing so as to face the side surfaces of the terminal tables to each other, each of coil units being constituted by the electromagnetic yoke, the coil bobbin capable of being connected to the sensor circuit board via two connection pins fitted and attached within the electromagnetic yoke and provided in the terminal table of the side surface upper end portion in a rising manner, and the yoke cover holding the coil bobbin within the electromagnetic yoke, however, in the present invention, the torque sensor is not necessarily limited to the structure in which the same coil units are faced to each other, but as far as the torque sensor is at least structured such as to face the coil bobbin held in the inner portion of the holding member to the coil bobbin having the same structure, the object can be achieved.

### Industrial Applicability

In accordance with the motor-driven power steering apparatus on the basis of the present invention, since the motor-driven power steering apparatus is provided with the coil bobbin capable of being connected to the sensor circuit board via two connection pins held in the inner portion of the holding portion formed by the electromagnetic yoke and the yoke cover and provided in the terminal table of the side surface upper end portion in a rising manner, the connection pin of the coil bobbin in one holding portion and the connection pin of the coil bobbin in the other holding portion are accurately positioned so as to be always in parallel with each other at a time of structuring the torque sensor formed by facing at least the coil bobbin and the coil bobbin having the same structure to each other, the sensor circuit board can be easily and securely attached to the housing without enlarging the through hole in the sensor circuit board, or damaging the sensor circuit board. Therefore, in accordance with the present invention, it is possible to provide the motor-driven power steering apparatus having a high reliability.

As mentioned above, in the case that the torque sensor is structured at least by the coil bobbin and the coil bobbin having the same structure, particularly in the case that the torque sensor is structured by using the coil unit having the same shape constituted by the coil bobbin having the same shape, it is possible to reduce the number of the mold at a time of molding, and it is possible to intend to use the parts in common, so that it is possible to reduce the manufacturing cost.

## Claims

1. A motor-driven power steering apparatus structured such that the motor-driven power steering apparatus is provided with a coil bobbin capable of being connected to a sensor circuit board via two connection pins held in an inner portion of a holding portion formed by an electromagnetic yoke and a yoke cover and provided in a terminal table of a side surface upper end portion in a rising manner, a torque sensor formed by facing at least the coil bobbin and the coil bobbin having the same structure to each other is attached and held within a sensor housing, and a steering torque generated on the basis of a steering wheel operation is detected by the torque sensor, wherein a regulating means for regulating a phase difference of each of the connection pins toward a peripheral direction is provided in the facing surface side of each of the terminal tables.

2. Amotor-driven power steering apparatus as claimed in claim 1, wherein the regulating means is constituted by a step formed by a concave portion and a convex portion in an axial direction in the facing surface side of each of the terminals.

3. Amotor-driven power steering apparatus as claimed in claim 1, wherein the regulating means is constituted by a concave portion and a convex portion provided so as to be fitted to each other in the facing surface side of each of the terminal tables.

4. A motor-driven power steering apparatus as claimed in any one of claims 1 to 3, wherein the regulating means provided in each of the terminal tables is formed in the same shape which is in parallel with the connection pin and is symmetrical to a perpendicular line passing through a center of the facing surface.

5. A motor-driven power steering apparatus as claimed in any one of claims 2 to 4, wherein a depth of the concave portion is set to be larger than a height of the convex portion.
